**Europäisches Patentamt**

**European Patent Office**

**Office européen des brevets**

(11) Veröffentlichungsnummer: **0 150 302**
**B1**

# EUROPÄISCHE PATENTSCHRIFT

(45) Veröffentlichungstag der Patentschrift:
**10.08.88**

(21) Anmeldenummer: **84114106.2**

(22) Anmeldetag: **22.11.84**

(51) Int. Cl.⁴: **C 08 F 8/30,** C 09 K 17/00,
C 08 J 3/24, C 08 F 220/00

(54) **Mit Wasser quellbare hochmolekulare Substanzen und deren Verwendung als Bodenverbesserungsmittel.**

(30) Priorität: **03.12.83 DE 3343852**
**14.03.84 DE 3409269**

(43) Veröffentlichungstag der Anmeldung:
**07.08.85 Patentblatt 85/32**

(45) Bekanntmachung des Hinweises auf die Patenterteilung:
**10.08.88 Patentblatt 88/32**

(84) Benannte Vertragsstaaten:
**BE CH DE FR GB LI NL**

(56) Entgegenhaltungen:
**EP-A-0 023 347**
**DE-A-3 029 027**
**GB-A-848 368**
**GB-A-1 162 032**
**US-A-3 716 506**

**M. Bennet, Concise Chemical and Technical
Dictionary Chemical Publishing Co. Inc., New York
and Edward Arnold (Publishers) Ltd., London, 3rd
edition, 1974, page 17**

(73) Patentinhaber: **Wolff Walsrode Aktiengesellschaft,
Postfach, D-3030 Walsrode 1 (DE)**

(72) Erfinder: **Huhn, Helmut, Dr., Nordsunderberg 13,
D-3030 Walsrode (DE)**
Erfinder: **Karstens, Werner, Wenzinger Strasse 2,
D-3036 Bomlitz (DE)**

(74) Vertreter: **Zobel, Manfred, Dr., c/o BAYER AG
Konzernverwaltung RP Patentabteilung
Bayerwerk, D-5090 Leverkusen (DE)**

**Beschreibung**

Die Erfindung betrifft mit Wasser quellbare Substanzen auf Basis vernetzter Polyacrylnitrilhydrolysate, vorzugsweise in Granulatform, und deren Verwendung zur Verbesserung der Wasserretention in sandigen Böden und Pflanzsubstraten.

Aus der EP-A-0 023 347 ist es bereits bekannt, zur Verbesserung der Wasserretention sandiger Böden 1 bis 20 Gew.-% eines mit N,N-Methylen-bis-acrylamid vernetzten Polyacrylamids zuzugeben. Dieses Polymerisat wird den Böden vorzugsweise in Granulatform zugemischt.

Es besteht ein Bedarf, solche Bodenverbesserungsmittel nicht nur mit gleich guten oder noch verbesserten Eigenschaften zur Verfügung zu stellen, sondern diese Mittel auch in einfacher Weise herzustellen.

Dies gelingt mit den erfindungsgemäßen Mitteln, die man durch Umsetzung eines wasserlöslichen Polyelektrolyten auf Basis von hydrolysierten Polyacrylnitrilen mit einem Vernetzungsmittel behält, wobei das Vernetzungsmittel ein Vernetzungsprodukt aus Aziridin und/oder Methylaziridin und einem mindestens bifunktionellen Veresterungsprodukte aus einem mindestens zweiwertigen Alkohol und Acryl- und/oder Methacrylsäure ist.

Ein Gegenstand der Erfindung sind daher mit Wasser quellbare, hochmolekulare Substanzen hergestellt durch Umsetzung von wasserlöslichen hydrolysierten Polyacrylnitrilen, die 30 - 80 Gew.-% Acrylsäureeinheiten aufweisen, die bis zu 100 %, vorzugsweise 60 - 95 %, als Ammonium und/oder Alkali- und/oder Erdalkalimetallsalze wie Na, K, Mg vorliegen können, 20 - 70 Gew.-% Acrylamid- und 0 - 10 Gew.-% Acrylnitrileinheiten in einer 5 bis 65 Gew.-%-igen wässriger Lösung, vorzugsweise einer 15 bis 50 Gew.-%-igen Lösung, mit 0,3 bis 10 Gew.-%, vorzugsweise 1,5 bis 5 Gew.-%, bezogen auf das hydrolysierte Polymerisat, eines Vernetzungsmittels, hergestellt durch Umsetzung von Aziridin und/oder Methylaziridin mit einem Veresterungsprodukt aus einem mindestens zweiwertigen Alkohol mit Acryl- und/ oder Methacrylsäure, wobei die Umsetzung des hydrolysierten Polyacrylnitrils mit dem Vernetzer bei Temperaturen von 0 - 100 °C, vorzugsweise von 20 - 85°C, bei Einhaltung von pH-Werten im Bereich von 3 bis 8 durchgeführt wird.

Ein weiterer Gegenstand der Erfindung ist die Verwendung der erfindungsgemäßen Substanzen zur Verbesserung der Wasserretention in sandigen Böden und Pflanzsubstraten.

Als Hydrolyseprodukte des Polyacrylnitrils können vorzugsweise solche Produkte verwendet werden, die gemäß der DE-OS-3 029 027 hergestellt wurden. Dabei wird die Hydrolyse vorzugsweise soweit geführt, daß das Hydrolyseprodukt 30 bis 80 Gew.-% Acrylsäureeinheiten, die als Salz vorliegen können, 20 bis 70 Gew.-% Acrylamideinheiten und 0 bis 10 Gew.-% Nitrileinheiten bestehen kann.

Als Vernetzungsmittel eignen sich insbesondere Umsetzungsprodukte von Aziridin und/oder Methylaziridin mit einem Veresterungsprodukt der Acryl- und/oder Methacrylsäure mit einem mindestens zweiwertigen Alkohol wie z. B. Glykol, Glycerin, Trimethylolpropan, Pentaerythrit, vorzugsweise einen dreiwertigen niedrigen Alkohol. Besonders bevorzugt kann als Vernetzer das Addukt aus Methylaziridin und Trimethylolpropantriacrylat eingesetzt werden.

Zur Herstellung der mit Wasser quellbaren Substanzen werden geeignete Polyelektrolyte in 5 bis 65 Gew.-%-iger wäßriger Lösung, vorzugsweise 15 bis 50 %-iger Lösung mit 0,3 bis 20 Gew.-%, vorzugsweise 1,5 bis 5 Gew.-%, bezogen auf das Polymere, eines oben angegebenen Vernetzers bei Temperaturen von 0 bis 100°C im pH-Bereich von 3 bis 8 vernetzt.

Da die Vernetzungsgeschwindigkeit durch die Temperatur gesteuert werden kann, gelingt nicht nur ein einfaches und wirtschaftliches Aufbringung der Komponenten auf gewunschte Substrate unter Anwendung der bekannten Auftragstechniken für Flüssigkeiten, sondern auch die kontinuierliche Herstellung zu einem gut rieselfähigen Endprodukt ohne große Störungen.

So betragt die "Topfzeit" der Mischung aus 20 Gew.-% wäßriger Lösung eines Polyelektrolyten, bestehend aus 48 Gew.-% Polyacrylamid- und 52 Gew.-% Polyacrylsäureeinheiten deren Carboxylgruppen zu 90 % durch Ammoniumhydroxid neutralisiert sind, und 3 Gew.-% des oben beschriebenen Produkts bei 20°C ca. 10 000 sec und bei 80°C ca. 30 sec. Als "Topfzeit" wird die Zeit angegeben, die bis zur Ausbildung eines formbeständigen Geles nach Vermischen der Komponenten gemessen wird.

Soll eine Substratbeschichtung mit den erfindungsgemäß hergestellten, mit Wasser quellbaren Substanzen vorgenommen werden, erfolgt die Vermischung des wäßrigen Polyelektrolyten mit dem Vernetzungsmittel bei Temperaturen vorzugsweise < 20°C. Nach Auftrag des Gemisches der beiden Komponenten erfolgt die Vernetzung bei der Trocknung der beschichteten Substrate.

Die Herstellung eines trockenen Granulates oder rieselfähigen Pulvers der mit Wasser quellbaren Substanzen kann diskontinuierlich oder kontinuierlich aus dem Gemisch mittels beheizbarer Rohrschnecke, Granuliereinrichtung und Trocknung erfolgen. Die Trocknung kann auf einem Strom- oder Wirbelbettrockner durchgeführt werden.

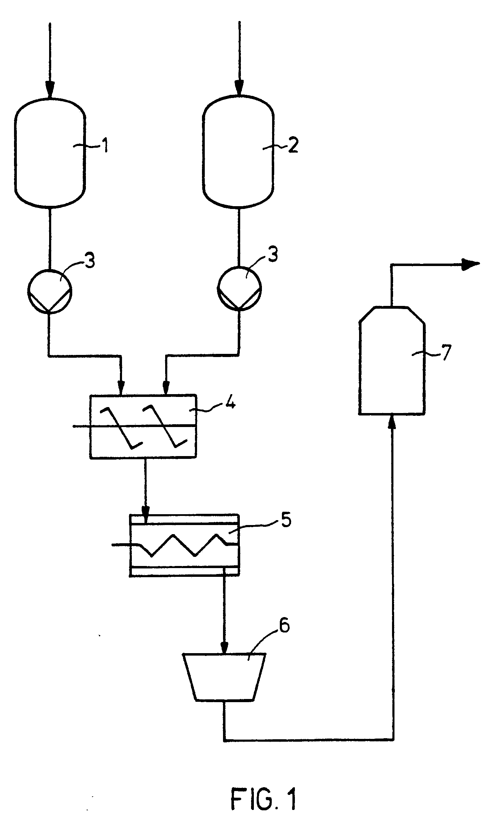

Vorzugsweise wird das Granulat wie in Fig. 1 dargestellt, hergestellt, wobei der Polyelektrolyt und Vernetzungskomponente aus getrennten Vorratsbehältern (1) und (2) mittels Dosierpumpen (3) über einen statischen Mischer (4) in einen Schneckenreaktor (5) gefördert und bei 60 - 100°C, vorzugsweise bei 80 - 90°C und einer Verweilzeit von 30 sec bis 5 min zur Umsetzung in eine Granuliervorrichtung (6) gebracht, granuliert und das Granulat in bekannter Weise auf einem Wirbelbettrockner (7) getrocknet wird.

Das erfindungsgemäße Bodenverbesserungsmittel wird vorzugsweise in Mengen von 1 - 8 kg/m$^3$, vorzugsweise von 2 - 4 kg /m$^3$ zugesetzt, wobei eine Wasserabsorption von bis zu 360 g/g Bodenverbesserungsmittel erzielt werden kann.

0 150 302

**Beispiel 1**

a, Polyelektrolytlsg: Hydrolysat eines Polyacrylnitrilcopolymerisates mit folgenden Analysendaten:
Feststoffgehalt: 30 Gew.-%
pH-Wert: 6,7
Viskosität (Höppler 20°C): 2000 mPaS
rel. Viskosität η rel: 1,8
Carboxylgruppengehalt ber. als polymere Acrylsäure: 41 Gew.-% vom Feststoff
b, Vernetzungsmittel: NeO Cryl CX 100®
c, Herstellung der erfindungsgemäßen Produkte.

In einem 1500 cm³ fassenden rostfreien Stahlbehälter werden 1000 g 30 gew.-%-ige wäßrige oben beschriebene Polyelektrolytlösung eingewogen und auf 85°C erwärmt.

In die erwärmte Lösung werden 45 g einer zuvor bereiteten 20 %-igen Emulsion des polyfunktionellen Vernetzungsmittels in Wasser von 20°C mittels Laborrührer bei 700 UpM eingerührt.

Die Vernetzung erfolgt innerhalb 40 sec zu einem formbeständigen, nicht klebrigen Gel. Das erhaltene Gel wird aus dem Stahlbehälter herausgenommen, mit einem Messer in Quader zerschnitten und mit einem handelsüblichen Fleischwolf granuliert. Die so erhaltenen Gelpartikel werden 1 Stunde bei 140°C im Umluftofen getrocknet und in einem Mörser bis auf eine Korngröße von 0,3 mm zerkleinert.

Die nach der Quellung absorbierte Wassermenge wird in folgender Weise bestimmt:

In ein 400 ml fassendes Becherglas werden 0,2 g der zerkleinerten Substanz eingewogen. Nach Hinzufügen von 200 g entionisiertem Wasser beläßt man das Substanz/Wasser-Gemisch zur ausreichenden Quellung 3 Stunden bei Raumtemperatur. Anschließend wird die gequollene Substanz über ein Polyethylengewebe mit 0,32 mm Maschenweite filtriert. Das Gewicht der gequollenen Substanz wird ermittelt und durch die eingesetzte Trockensubstanzmenge dividiert. Der so erhaltene Wert wird als Wasserabsorption definiert. Die Wasserabsorption betrug 260 g/g Substrat.

**Beispiele 2 - 4**

Variation der Vernetzerkonzentration.
Ausgangsprodukte und Reaktionsbedingungen wie in Beispiel 1.

| Polyelektrolytlösung 30 Gew.-% | Vernetzeremulsion 20 Gew.-% | Wasserabsorption des Quellstoffes |
|---|---|---|
| 1000 g | 30 g | 300 |
| 1000 g | 75 g | 95 |
| 1000 g | 105 g | 60 |

**Beispiel 5**

Der in Beispiel 1 eingesetzte Polyelektrolyt wurde mit 7 % KOH, bezogen auf Gesamtfeststoff umgesetzt und das abgespaltene Ammoniak bei 98°C solange abdestilliert, bis der pH-Wert auf 6,8 abgesunken war. Anschließend wurde mit Phosphorsäure ein pH-Wert von 5,5 eingestellt.

Polyelektrolytlösung und Vernetzeremulsion nach Beispiel 1 wurden in der kontinuierlichen Apparatur über einen Statik-Mischer gegeben, so daß ein Gemisch von 97 % Polyelektrolyt und 3 % Vernetzer resultierte. Die Mischung wurde im nachgeschalteten Schneckenreaktor auf 85°C aufgeheizt und bei einer Verweilzeit von 90 sec unter Gelierung vollständig umgesetzt.

Das gelartige Granulat wurde über die am Kopfende der Apparatur angebrachte Lochscheibe in einen Wirbelbett-Trockner eingebracht und auf eine Restfeuchte von 3 % getrocknet.

Das Produkt ergibt eine Wasserabsorption von 160 g/g Substrat.

**Beispiel 6**

Der Polyelektrolyt wird wie folgt hergestellt:

In einem für 30 bar Druck ausgelegten 300 l fassenden mit Rührwerk versehenen Autoklaven werden zu 84 kg 32,9 %-iger wäßriger Polyacrylnitrilcopolymerisatsuspension polymerisiert aus einer Monomerenmischung, enthaltend 95 Gew.-% Acrylnitril und 5 Gew.-% Methacrylat, mit einer Grenzviskositätszahl η des Copolymeren

3

von 2,25 dl/g, bei 20°C 9,67 kg KOH 88 - 90 Gew.-% gelöst in 87,5 kg Wasser gegeben und nach Verschließen des Autoklaven unter Stickstoff als Schutzgas und Rühren auf 185°C aufgeheitzt und 5 Stunden bei dieser Temperatur hydrolysiert.

Nach Ablauf der Reaktionszeit wurde die Beheizung des Autoklaven unterbrochen und der Ansatz durch Entspannen auf 100°C abgekühlt. Nach weiterer Kühlung auf 30°C kann der Ansatz abgelassen werden.

Das erhaltene, klare, leicht gefärbte Produkt besitzt folgende Analysendaten:

| | |
|---|---|
| Feststoffgehalt: | 35 Gew.-% |
| pH-Wert: | 7,0 |
| Viskosität (Höppler 20°C): | 24 400 mPas |
| rel. Viskosität η rel | 2,43 |
| Carboxylgruppengehalt (ber. als polymere Acrylsäure) | 49 % |

Vernetzungsmittel:

Trifunktionelles Addukt als Methylaziridin und Trimethylolpropantriacrylat (Handelsprodukt der Polyvinyl Chemie, NeO Cryl CX 100).

Die Polyelektrolytlösung und Vernetzeremulsion wurden in der kontinuierlichen Apparatur über einen Statik-Mischer gegeben, so daß ein Gemisch von 98 % Polyelektrolyt und 2 % Vernetzungsmittel resultierte.

Die Mischung wurde im nachgeschalteten Schneckenreaktor auf 85°C aufgeheizt und bei einer Verweilzeit von 90 sec unter Gelierung vollständig umgesetzt.

Das gelartige Granulat wurde über die am Kopfende der Apparatur angebrachten Lochscheibe in einem Wirbelbetttrockner eingebracht und bei 150°C auf eine Restfeuchte von 2,3 % getrocknet.

Das Produkt zeigte eine Wasseradsorption von 360 g/g Substrat. Durch Zumischung dieser Substanz zu einem handelsübliche Pflanzensubstrat auf Basis Rindenkompost (Edaphon V®) wurde die maximale Wasserkapazität wie folgt verbessert:

maximale Wasserkapazität

| | | | |
|---|---|---|---|
| Edaphon® ohne | Zusatzmittel | 42 Vol-% | H₂O |
| Edaphon® + 2 g/l | " | 55 " | " |
| Edaphon® + 4 g/l | " | 60 " | " |

Hierdurch wird der für das Pflanzenwachstum optimale Bereich > 50 Vol-% $H_2O$ erreicht.

## Patentansprüche

1. Mit Wasser quellbare hochmolekulare Substanzen, hergestellt durch Umsetzung von wasserlöslichen Hydrolyseprodukten von Polyacrylnitrilpolymerisaten mit 30 - 80 Gew.-%. Acrylsäureeinheiten, die bis zu 100 % als Ammoniumsalze, Alkali- und/oder Erdalkalimetallsalze vorliegen können, 20 - 70 Gew.-%. Acrylamid- und 0 - 10 Gew.-%. Acrylnitrileinheiten, in einer 5 bis 65 Gew.-%-igen wäßrigen Lösung mit 0,3 bis 10 Gew.-%, bezogen auf hydrolysierte das Polymerisat, eines Vernetzungsmittels, hergestellt durch Umsetzung von Aziridin und/oder Methylaziridin mit einem mindestens bifunktionellen Veresterungsprodukt aus einem mindestens zweiwertigen Alkohol mit Acryl- und/oder Methacrylsäure, wobei die Umsetzung des Polymerisats mit dem Vernetzungsmittel bei Temperaturen von 0 - 100°C im pH-Bereich von 3 - 8 durchgeführt wird.

2. Substanzen nach Anspruch 1 dadurch gekennzeichnet, daß eine 15 - 50 Gew.-%. wäßrige Lösung des Hydrolyseprodukt, mit 1,5 - 5 Gew.-%. des Vernetzungsmittels umgesetzt werden.

3. Substanzen nach wenigstens einem der vorhergehenden Ansprüche, dadurch gekennzeichnet, daß die Umsetzung des Hydrolyseprodukts mit dem Vernetzer bei Temperatur von 20 - 85°C durchgeführt wird.

4. Substanzen nach wenigstens einem der vorhergehenden Ansprüche, dadurch gekennzeichnet, daß als Vernetzer das Addukt aus Methylaziridin und Trimethylolpropentriacrylat eingesetzt wird.

5. Substanzen nach wenigstens einem der vorhergehenden Ansprüche in Granulatform.

6. Verwendung der Substanzen nach wenigstens einem der vorhergehenden Ansprüche zur Verbesserung der Wasserretention in sandigen Böden und Pflanzsubstraten.

7. Verwendung nach Anspruch 6, dadurch gekennzeichnet, daß das Bodenverbesserungsmitten in Mengen von 1 - 8 kg/m³ eingesetzt wird.

## Claims

1. High molecular weight substances capable of swelling in water, repared by the reaction of water-soluble products of hydrolysis of polyacrylonitrile polymers containing from 30 to 80 % by weight of acrylic acid units up to 100 % of which may be present in the form of ammonium salts, alkali metal salts and/or alkaline earth metal salts, from 20 to 70 % by weight of acrylamide units and from 0 to 10 % by weight of acrylonitrile units in a 5 to 65 % by weight aqueous solution with from 0.3 to 10 % by weight, based on the hydrolysed polymer, of a cross-linking agent prepared by the reaction of aziridine and/or methylaziridine with an at least bifunctional product of esterification of an at least dihydric alcohol with acrylic and/or methacrylic acid, the reaction of the polymer with the cross-linking agent being carried out at temperatures of from 0 to 100°C in the pH range of from 3 to 8.

2. Substances according to claim 1, characterised in that a 15 to 50 % by weight aqueous solution of the product of hydrolysis is reacted with from 1.5 to 5 % by weight of the cross-linking agent.

3. Substances according to at least one of the preceding claims, characterised in that the reaction of the product of hydrolysis with the cross-linking agent is carried out at a temperature of from 20 to 85°C.

4. Substances according to at least one of the preceding claims, characterised in that the cross-linking agent used is the adduct of methylaziridine and trimethylolpropene triacrylate.

5. Substances according to at least one of the preceding claims in granular form.

6. Use of the substances according to at least one of the preceding claims for improving the water retention in sandy soils and plant substrates.

7. Use according to claim 6, characterised in that the soil improving agent is used in quantities of from 1 to 8 kg/m$^3$.

## Revendications

1. Substances à poids moléculaire élevé gonflables par l'eau, fabriquées par réaction de produits d'hydrolyse solubles dans l'eau de polymères de polyacrylonitrile à 30 - 80% en poids d'unités acide acrylique, qui peuvent se présenter jusqu'à concurrence de 100 % sous forme de sels d'ammonium, de sels alcalins et/ou alcalino-terreux, à 20 - 70 % en poids d'unités acrylamide et à 0 - 10 % en poids d'unités acrylonitrile, dans une solution aqueuse à 5 - 65 % en poids, avec 0,3 à 10 % en poids par rapport au polymère hydrolysé d'un agent de réticulation qui a été préparé par réaction d'aziridine et/ou de méthylaziridine avec un produit d'estérification au moins bifonctionnel obtenu à partir d'un alcool au moins bivalent avec de l'acide acrylique et/ou méthacrylique, la réaction du polymère avec l'agent de réticulation étant effectuée à des températures de 0 - 100°C dans l'intervalle de pH de 3 à 8.

2. Substances selon la revendication 1, caractérisées en ce qu'on fait réagir une solution aqueuse à 15 - 50 % en poids du produit d'hydrolyse avec 1,5 à 5 % en poids de l'agent de réticulation.

3. Substances selon au moins une des revendications 1 et 2, caractérisées en ce qu'on exécute la réaction du produit d'hydrolyse avec le réticulant à une température de 20 à 85°C.

4. Substances selon au moins une des revendications 1 à 3, caractérisées en ce qu'en tant que réticulant on utilise le produit d'addition de méthylaziridine et de triacrylate de triméthylolpropane.

5. Substances selon au moins une des revendications 1 à 4 sous la forme de granulat.

6. Utilisation des substances selon au moins une des revendications 1 à 5 pour l'amélioration de la rétention d'eau dans les sols sablonneux et dans les substrats pour plantes.

7. Utilisation selon la revendication 6, caractérisée en ce qu'on utilise l'agent d'amélioration du sol en des quantités de 1 à 8 kg/m$^3$.

FIG. 1